**Europäisches Patentamt**

**European Patent Office**

**Office européen des brevets**

(19)

(11) Veröffentlichungsnummer: **0 095 143 B1**

(12) # EUROPÄISCHE PATENTSCHRIFT

(45) Veröffentlichungstag der Patentschrift:
08.11.89

(21) Anmeldenummer: **83104942.4**

(22) Anmeldetag: **19.05.83**

(51) Int. Cl.⁴: **C 02 F  11/02, C 02 F  3/34, C 05 F  9/04**

(54) **Verfahren zur biologischen Konservierung organischen Materials in Klärschlamm und Gülle.**

(30) Priorität: 25.05.82  CH 3196/82

(43) Veröffentlichungstag der Anmeldung:
**30.11.83 Patentblatt 83/48**

(45) Bekanntmachung des Hinweises auf die Patenterteilung:
**08.11.89 Patentblatt 89/45**

(84) Benannte Vertragsstaaten:
**AT BE CH DE FR GB IT LI LU NL SE**

(56) Entgegenhaltungen:
**CH-A- 597 107
CH-A- 616 396
CH-A- 627 718
CH-A- 629 976
DE-A- 1 459 488

JOURNAL OF WATER POLLUTION CONTROL
FEDERATION, Band 54, Nr. 4, April 1982, Seiten 352-360,
Washington, US; D.S. MAVINIC et al.: "Fate of nitrogen
in aerobic sludge digestion"**

(73) Patentinhaber: **Hans Nebiker AG, Hauptstrasse 1,
CH-4450 Sissach (CH)**

(72) Erfinder: **Nebiker, Hans, Hauptstrasse 1,
CH-4450 Sissach (CH)**

(74) Vertreter: **Brauneiss, Leo, Patentanwälte Dipl.-Ing.
Peter Boeckmann, Dipl.-Ing. Leo Brauneiss
Strohgasse 10, A-1030 Wien (AT)**

**Beschreibung**

Die Erfindung betrifft ein Verfahren zur Hygienisierung von organische Stoffe enthaltenden Flüssigkeiten oder Schlämmen, die in einem Reaktorbehälter während einer Zeitdauer von zwei bis fünf Tagen belüftet und auf einer Temperatur von maximal 55 °C, vorzugsweise von 25° bis 30 °C, gehalten werden. Insbesondere betrifft die Erfindung ein Verfahren zur Hygienisierung von Siedlungs-Rohwasser, Klärschlamm, Klärschlamm-Kehricht-Gemischen und Harn-Kot-Gemischen (Gülle) aus der Haustierhaltung.

Es ist bereits ein Verfahren zur Hygienisierung von Klärschlamm einer Flüssigrotte bekannt, bei welchem der Hygienisierungseffekt durch antagonistische Wirkungen erwünschter Mikroben erreicht und aufrecht erhalten wird. Hiebei wird in einem teilweise aeroben, in einem thermophilen Temperaturbereich stattfindenden Rotteprozeß eine Mineralisierung und damit Hygienisierung des Schlammes erreicht, wobei eine organische Bindung von Makro- und Mikronährstoffen sowie von Schwermetallen erfolgt. Es entsteht ein homogenes Substrat, welches bis zu 18% Trockensubstanz und mehr pumpfähig ist und selbsttätig entwässert, und die Gasausbeute bei einer anschließenden Methanisierung wird gegenüber der konventionellen Methanisierung erhöht. Nachteilig ist bei diesen bekannten Verfahren, daß der organische Stickstoffanteil des Endproduktes meist unter 50% des Gesamtstickstoffes liegt. Dies ist ungünstig, wenn das Endprodukt als Dünger verwendet wird, da der Stickstoffgehalt im Boden meist zu über 90% organisch gebunden ist und daher getrachtet werden soll, daß der Dünger auch einen hohen Prozentsatz organisch gebundenen Stickstoffes enthält.

Aus der CH-A-616 396 ist bereits ein Verfahren zur Hygienisierung von organische Stoffe enthaltenden Flüssigkeiten oder Schlämmen in einem belüfteten Reaktorbehälter bei einer Temperatur zwischen 25° und 40 °C während einer Zeitdauer von drei bis acht Tagen bekannt geworden. Auch bei diesem Verfahren tritt der erwähnte Nachteil auf, daß das erhaltene Endprodukt nur einen verhältnismäßig geringen Anteil von Stickstoff in organisch gebundener Form enthält.

Der erwähnte Nachteil tritt auch auf bei dem aus der CH-A-550 744 bekannt gewordenen Verfahren zum Reinigen von Abwasser und Aufbereiten von Schlamm, bei welchem ein von der Abwasserreinigung herrührender Klärschlamm eingedickt, entwässert und anschließend in einem Reaktorbehälter belüftet und dabei einem Rotteprozeß unterworfen wird, wobei die bei der Bildung des Klärschlammes in diesem vorhandene Biologie, die zum biologischen Abbau des Klärschlammes notwendig ist, durch Zufuhr von Sauerstoff auf dem Transportweg des Klärschlammes zum Reaktorbehälter am Leben erhalten wird. Bei diesem bekannten Verfahren treten im Reaktorbehälter Temperaturen zwischen 75° und 85 °C auf, bei welchen eine Mineralisierung des Stickstoffes erfolgt, also der organische Stickstoff in anorganische Formen übergeführt wird.

Es ist somit Aufgabe der vorliegenden Erfindung, ein Verfahren zur Hygienisierung von organische Stoffe enthaltenden Flüssigkeiten oder Schlämmen zu schaffen, mit welchem ein düngungsphysiologisch und ökologisch einwandfreies Endprodukt erzielt werden kann. Diese Aufgabe wird durch die Merkmale des Anspruches 1 gelöst.

Es hat sich gezeigt, daß für die Gewinnung eines düngungsphysiologisch und ökologisch einwandfreien Endproduktes das Zustandekommen der Proteinsynthese, d.h. die Bindung des Stickstoffes und anderer Makronährstoffe und Schwermetalle in neue Bakteriensubstanz-Einzeller-Proteine eine unerläßliche Voraussetzung ist und daß diese Proteinsynthese einerseits durch im thermophilen Bereich liegende Temperaturen, anderseits durch eine anaerobe Vorbehandlung blockiert wird, so daß dann nicht mehr der gewünschte Gehalt an organisch gebundenem Stickstoff im Endprodukt erhalten wird. Durch Temperaturen im thermophilen Bereich erfolgt eine Mineralisierung des Stickstoffes, der organische Stickstoff wird somit in anorganische Formen, d.h. in Ammoniak, Ammonium, Nitrat bzw. Nitrit übergeführt. Der optimale Temperaturbereich beim erfindungsgemäßen Verfahren liegt somit bei 25 bis 30 °C. Bei diesem relativ niederen Temperaturbereich bedarf es zwar zur biologischen Selbstreinigung einer längeren Einwirkungszeit als bei thermophilen Temperaturen, damit eine stabile Hygienisierung gesichert ist, so daß die Behandlung in einer Zeitdauer von etwa zwei bis fünf Tagen vorgenommen werden muß und somit ein Reaktorbehälter benötigt wird, der zwei bis fünf Mal größer ist als die tägliche Schlamm- oder Gülleproduktion bei 5 bis 7% Trockensubstanz, dafür bedarf jedoch das Endprodukt keinerlei Nachbehandlung.

Auch durch eine teilweise anaerob stattfindende Vorgärung der behandelten Flüssigkeiten bzw. Schlämme entsteht ein ungleichmäßig zusammengesetztes Vorfaulsubstrat (Primärschlamm bzw. Vorklärschlamm), das, auch wenn es zusammen mit einem aerob aufbereiteten Überschußschlamm im Reaktorbehälter einer aeroben Behandlung unter den erwähnten Temperaturen unterworfen wird, auf die für die Bildung des organischen Stickstoffes wesentliche Proteinsynthese hemmend wirkt, so daß in diesem Fall der Stickstoff zu weniger als 65% des Gesamtstickstoffwertes organisch gebunden wird und auch der Prozeß der Versäuerung als Basis des Konservierungseffektes ungenügend ist. Die selben Nachteile treten auch bei einer bei Schwemmentmistung teilweise anaerob vorgelagerten Gülle auf.

Die Anwendung des erfindungsgemäßen Verfahrens bringt folgende Vorteile mit sich:

Es wird ein Endprodukt erhalten, das bis zu 90% des Gesamtstickstoffes in organisch gebundener Form enthält. Dieses Endprodukt kann in hervorragender Form als Dünger eingesetzt werden, da, wie bereits erwähnt, auch der Stickstoffgehalt im Boden zu 90% organisch gebunden ist. Das Endprodukt kann aber unter der Voraussetzung, daß es nur aus Gülle oder aus Klärschlamm aus rein häuslichem Rohwasser ohne Beimischung von industriellen und gewerblichen Schadstoffen gebildet wurde, auch in flüssiger oder schüttbarer Form als Eiweißzusatzfutter verwendet werden.

Während beim bisher bekannten Verfahren durch Freisetzung von Ammoniak, Phenolen, Kresol, Indol, Mercaptan oder Schwefelwasserstoff eine störende Geruchsemission verursacht wurde, tritt eine solche bei einem nach dem erfindungsgemäßen Verfahren gebildeten Endprodukt nicht auf, dieses ist vielmehr ohne jegliche Nachbehandlung geruchsfrei und hygienisch und bleibt in seiner boden- und pflanzenkonformen organischen Zusammensetzung über Monate homogen und stabil, es kann somit ohne besondere Vorkehrungen lange gelagert werden.

Dadurch, daß das erfindungsgemäße Verfahren auf die Bildung organischer Säuren wie Essigsäure und Propionsäure fördernd einwirkt, erfolgt eine natürliche Konservierung der organischen Substanzen im Endprodukt.

Das Klarwasser, das bei Anwendung des erfindungsgemäßen Verfahrens bei aerober Sedimentation oder aerober Flotation abscheidet, ist in Bezug auf Sichttiefe sowie Gehalt an organischem und anorganischem Stickstoff und Phosphor dem Klarwasser aus der Nachklärung ebenbürtig.

Auch bei Anwendung des erfindungsgemäßen Verfahrens kann das Endprodukt einer reinen anaeroben Methangärung unterworfen werden.

Auch beim erfindungsgemäßen Verfahren ist, ebenso wie bei den bekannten Verfahren, eine selbsttätige Entwässerung bis zu 18% Trockensubstanz und mehr gewährleistet, desgleichen die Pumpfähigkeit.

Da, wie aus den vorangehenden Ausführungen hervorgeht, für das Endprodukt dessen Anteil an organisch gebundenem Stickstoff wesentlich ist, ist es von Vorteil, wenn der aerobe Behandlungsvorgang in Abhängigkeit vom organisch gebundenem Stickstoff geregelt wird.

Soll Überschußschlamm aus der Nachklärung hygienisiert werden, so wird zweckmäßig gemäß Anspruch 3 vorgegangen. Im Eindicker findet hiebei kein anaerober Prozeß statt.

Gemäß Anspruch 4 können an Stelle der selbsttätigen aeroben Entwässerung des Überschußschlammes – bei aerober Flotation oder bei aerober Sedimentation die im Rohwasser enthaltenen Feststoffe mechanisch, z.B. durch ein Filter oder auf andere Weise abgesondert und unter Beibehaltung der aeroben Verhältnisse direkt dem aeroben Überschußschlamm beigemischt werden. Damit läßt sich unter Umgehung eines aeroben Eindickers der gewünschte Gehalt an Trockensubstanz für den Rotteprozeß direkt im Reaktorbehälter einstellen, ohne daß ein teils anaerober Zustand eintritt.

Vorzugsweise werden, um die Fixierung des Stickstoffes zu aktivieren, den im Reaktorbehälter befindlichen Flüssigkeiten oder Schlämmen Einzellermikroorganismen, z.B. Hefen, Bakterien oder deren Enzyme, zugesetzt.

Um eine selbsttätige Trocknung von Klärschlamm und Gülle ohne Fremdwärme zu erzielen, kann erfindungsgemäß den im Reaktorbehälter befindlichen Flüssigkeiten oder Schlämmen ein Kohlenstoffträger, z.B. in Form von gereinigtem Kehricht, Baumrinde, Sägemehl, Strohmehl beigemengt werden. Die Beimengung eines solchen Kohlenstoffträgers den zu hygienisierenden Flüssigkeiten oder Schlämmen ist an sich bereits bekannt. Dadurch, daß jedoch dieser Kohlenstoffträger im Reaktorbehälter beigemengt wird, und zwar auch bei anschließender Methanstufe, erhält das Rottesubstrat-Gemisch strukturbildende Eigenschaften und es wird das beim Trocknungsvorgang gewonnene Trockengut krümmelig, porös und daher schüttbar und preßbar sowie hygienisch stabil lagerfähig.

## Patentansprüche

1. Verfahren zur Hygienisierung von organische Stoffe enthaltenden Flüssigkeiten oder Schlämmen, die in einem Reaktorbehälter während einer Zeitdauer von zwei bis fünf Tagen belüftet und auf einer Temperatur von maximal 55 °C, vorzugsweise von 25° bis 30°C, gehalten werden, dadurch gekennzeichnet, daß die Flüssigkeiten bzw. Schlämme ohne anaerobe Vorbehandlung ausschließlich einer aeroben Behandlung im flüssigen Milieu unterworfen werden.

2. Verfahren nach Anspruch 1, dadurch gekennzeichnet, daß der aerobe Behandlungsvorgang in Abhängigkeit vom organisch gebundenen Stickstoff geregelt wird.

3. Verfahren nach Anspruch 1 oder 2 zur Hygienisierung von Überschußschlamm aus der Nachklärung, dadurch gekennzeichnet, daß dem Reaktorbehälter ein Eindicker vorgeschaltet wird, in dem die dem Reaktorbehälter zugeführten Feststoffe durch aerobe Sedimentation oder aerobe Flotation ausgeschieden werden und das abgesonderte Klarwasser in ein Belebungsbecken oder einen Vorfluter zurückgeleitet wird, derart, daß der Anteil an Trockensubstanz vorzugsweise zwischen 5 und 7% gehalten wird.

4. Verfahren nach Anspruch 1 oder 2, dadurch gekennzeichnet, daß die im Rohwasser enthaltenen Feststoffe mechanisch, z.B. durch ein Filter abgesondert und, vorzugsweise zusammen mit dem aeroben Überschußschlamm aus einer Nachklärung, dem Reaktorbehälter zugeführt werden, derart, daß der Anteil an Trockensubstanz vorzugsweise zwischen 5 und 7% gehalten wird.

5. Verfahren nach einem der Ansprüche 1 bis 4, dadurch gekennzeichnet, das den im Reaktorbehälter befindlichen Flüssigkeiten oder Schlämmen Einzellermikroorganismen, z.B. Hefen, Bakterien, oder deren Enzyme zugesetzt werden.

6. Verfahren nach einem der Ansprüche 1 bis 5, dadurch gekennzeichnet, daß den im Reaktorbehälter befindlichen Flüssigkeiten oder Schlämmen ein Kohlenstoffträger, z.B. gereinigter Kehricht, Baumrinde, Sägemehl, Strohmehl beigemengt wird.

## Claims

1. Method for the sanitisation of fluids or sludges containing organic materials, said fluids or sludges being ventilated in a reactor vessel for a period of two to five days and being maintained at a temperature of maximum 55°C, preferably from 25° to 30°C, characterised in that the fluids or sludges are subjected exclusively to aerobic treatment in the fluid medium, without anaerobic pretreatment.

2. Method according to claim 1, characterised in that the aerobic treatment process is regulated in accordance with the organically bound nitrogen.

3. Method according to claim 1 or 2, for the sanitisation of sludge remaining from the secondary sedimentation, characterised in that before the reactor vessel there is a thickener in which the solid materials which are conveyed to the reactor vessel are separated out by aerobic sedimentation or aerobic flotation, and the separated clear water is fed back into an activated sludge tank or an outfall, in such a manner that the proportion of dry substance is maintained preferably between 5 and 7%.

4. Method according to claim 1 or 2, characterised in that the solid materials contained in the untreated water are separated mechanically, e.g. by means of a filter, and are conveyed to the reactor vessel, preferably together with the aerobic sludge remaining from a secondary sedimentation, in such a manner that the proportion of dry substance is maintained preferably between 5 and 7%.

5. Method according to any one of the claims 1 to 4, characterised in that unicellular micro-organisms, e.g. yeasts, bacteria, or their enzymes, are added to the fluids or sludges present in the reactor vessel.

6. Method according to any one of the claims 1 to 5, characterised in that a carbon carrier, e.g. purified refuse, tree bark, sawdust, or powdered straw, is admixed to the fluids or sludges present in the reactor vessel.

## Revendications

1. Procédé pour rendre hygiéniques des liquides ou boues qui contiennent des matières organiques et qui ont été aérés pendant une durée de deux à cinq jours et maintenus à une température de 55°C maximum, de préférence de 25°C à 30°C, dans une cuve de réacteur, caractérisé en ce que l'on soumet les liquides ou boues exclusivement à un traitement aérobie en milieu liquide, sans prétraitement anaérobie.

2. Procédé selon la revendication 1, caractérisé en ce que l'on ajuste le processus de traitement aérobie en fonction de l'azote lié par voie organique.

3. Procédé selon la revendication 1 ou 2 pour rendre hygiénique de la boue résiduaire provenant de la post-décantation, caractérisé en ce que, en amont de la cuve de réacteur, il est monté un épaississeur dans lequel les matières solides alimentant la cuve de réacteur ont été séparées par sédimentation aérobie ou par flottation aérobie et l'eau clarifiée et séparée, renvoyée dans un bassin de brassage ou dans un émissaire, de telle façon que la teneur en matière sèche soit maintenue de préférence entre 5 et 7%.

4. Procédé selon la revendication 1 ou 2, caractérisé en ce que l'on sépare mécaniquement les matières solides contenues dans l'eau résiduaire, par exemple à l'aide d'un filtre, et on les introduit dans la cuve de réacteur, de préférence avec la boue résiduaire aérobie provenant d'une post-décantation, de telle façon que la teneur en matière sèche soit maintenue de préférence entre 5 et 7%.

5. Procédé selon l'une des revendications 1 à 4, caractérisé en ce que l'on ajoute des microorganismes uni-cellulaires, par exemple des levures, des bactéries ou leurs enzymes, aux liquides ou boues se trouvant dans la cuve de réacteur.

6. Procédé selon l'une des revendications 1 à 5, caractérisé en ce que l'on ajoute un support carboné, par exemple des détritus épurés, des écorces d'arbres, de la sciure de bois, des débris de paille, aux liquides ou boues se trouvant dans la cuve de réacteur.